# EUROPÄISCHE PATENTSCHRIFT

(11) **EP 3 336 136 B1**
(45) Veröffentlichungstag und Bekanntmachung des Hinweises auf die Patenterteilung: **09.02.2022**
(21) Anmeldenummer: 17207354.6
(22) Anmeldetag: 14.12.2017
(51) Int. Cl.: B29C 37/00, B29C 45/14, C08J 7/12

(54) **VERFAHREN ZUR MODIFIZIERUNG VON KUNSTSTOFFOBERFLÄCHEN UND MODIFIZIERTE KUNSTSTOFFOBERFLÄCHEN MIT CHEMISCH FUNKTIONALISIERTEN MIKROKAVITÄTEN**
METHOD FOR MODIFYING PLASTIC SURFACES AND MODIFIED PLASTIC SURFACES HAVING CHEMICALLY FUNCTIONALIZED MICROCAVITIES
PROCÉDÉ DE MODIFICATION DES SURFACES EN MATIÈRE PLASTIQUE ET SURFACES EN MATIÈRE PLASTIQUE MODIFIÉES POURVUES DE MICROCAVITÉS FONCTIONNALISÉS CHIMIQUEMENT

(30) Priorität: 15.12.2016 DE 102016124439
(43) Veröffentlichungstag der Anmeldung: 20.06.2018
(73) Patentinhaber: Leibniz-Institut für Polymerforschung Dresden e.V., 01069 Dresden (DE)
(72) Erfinder: NAGEL, Jürgen, 01328 Dresden (DE); ZIMMERMANN, Philipp, 01309 Dresden (DE)
(74) Vertreter: Rauschenbach, Marion

(56) Entgegenhaltungen:
- WO-A1-2016/142131
- US-A1- 2016 160 436
- US-B1- 6 261 697
- "A Basic Guide to Particle Characterization", Malvern Instruments Worldwide - White Paper, 2 May 2012 (2012-05-02), pages 1-26, XP055089322, Retrieved from the Internet: URL:http://golik.co.il/Data/ABasicGuidtoPa rticleCharacterization(2)_1962085150.pdf

## Beschreibung

Die Erfindung bezieht sich auf die Gebiete der Chemie und des Maschinenbaus und betrifft ein Verfahren zur Modifizierung von Kunststoffoberflächen während eines Formgebungsprozesses und modifizierte Kunststoffoberflächen mit chemisch funktionalisierten Mikrokavitäten, die beispielsweise für weitere Beschichtungen oder für das Mehrkomponentenspritzgießen beispielsweise in der Automobilindustrie oder im Maschinenbau eingesetzt werden können.

Die Modifizierung von Kunststoffoberflächen stellt eine wichtige Voraussetzung für eine gute Haftung einer nachfolgend aufgebrachten Schicht oder von zu fügenden Komponenten dar. Bei der Kombination von verschiedenen Komponenten, wie beispielsweise beim Mehrkomponentenspritzgießen, bei der Mehrschicht(-folien) - extrusion, beim Kleben, beim Bedrucken oder beim Beschichten, wird die Verbundfestigkeit durch die Eigenschaften in der Grenzfläche der Kunststoffoberflächen bestimmt. Die allgemeine Regel - je geringer die Unterschiede in der Oberflächenspannung und in der Polarität der Haftpartner, umso verträglicher sind die Partner und umso besser ist die Haftung - ist nur bedingt anwendbar. Nach dieser empirischen Regel werden vielfach die Kunststoffe entweder entsprechend ausgesucht oder dafür hergestellt.

Die Ursache für die Abweichungen von dieser Regel ist darin zu suchen, dass die Verbundfestigkeit und die daraus resultierenden Eigenschaften durch eine Vielzahl chemischer, physikalischer oder materialspezifischer Parameter beeinflusst werden, die meist komplex miteinander zusammenhängen.

Von Wu, S.: Polymer Interfaces and Adhesion, Marcel Dekker, Inc. New York Basel 1982, werden verschiedene Parameter und die Verfahren zur Bestimmung dieser Größen ausführlich beschrieben. Einen erheblichen Einfluss auf die Verbundfestigkeit haben unteranderem die Vorbehandlung der Oberflächen der Kunststoffteile oder die technisch-technologischen Parameter bei der Verbundbildung.

Die Vorbehandlung von Kunststoffoberflächen ist auch deshalb notwendig, da diese Oberflächen in der Regel hydrophob sind und/oder wenig oder keine funktionellen Gruppen aufweisen, und daher aktiviert werden müssen. Eine derartige Aktivierung zur Verbesserung der Verbundbildung an der Grenzfläche wird durch chemische oder physikalische Vorbehandlung, wie Beflammen, Coronaentladung, Plasmabehandlung oder Laserbehandlung, realisiert.

Die Plasma- oder Coronabehandlung sind die bekanntesten Verfahren zur Vorbehandlung von Kunststoffoberflächen. Durch elektrische Entladung in Luft (Corona) oder im leichten Vakuum (Plasma) werden die Kunststoffe an der Oberfläche aktiviert, das heißt, durch Bildung polarer Gruppen modifiziert. Dadurch wird eine erhöhte Reaktivität an der Kunststoffoberfläche erzielt. Derart behandelte Kunststoffoberflächen weisen eine bessere Haftung bei nachfolgenden technologischen Schritten der Beschichtung auf (Mehrkomponentenspritzgießtechnik 2000, Springer-VDI-Verlag, Düsseldorf, 2000).

Nachteilig bei diesen Verfahren ist, dass sie zusätzliche technologische Schritte erfordern, zeit- und kostenaufwendig sind und die Wirkungen und die Stabilität der Vorbehandlung insbesondere über längere Zeiträume nicht permanent sind.

Zur Verbesserung dieser Nachteile sind weitere Verfahren bekannt.

Aus der DE 10 042 566 A1 ist ein Verfahren zur Modifizierung von Kunststoffoberflächen bekannt, bei dem während oder unmittelbar nach oder nach einem Formgebungsprozess die Temperatur der Kunststoffoberfläche mindestens die onset-Temperatur des Reaktionspeaks in der DSC-Kurve ist, und eine oder mehrere Modifikatorsubstanz(en) ganz oder teilweise mit der Oberfläche der geformten Kunststoffe in Kontakt gebracht wird, wobei als Modifikatorsubstanz solche Stoffe eingesetzt werden, die mit der Oberfläche des geformten Kunststoffes eine Reaktion eingehen und/oder durch Interdiffusion in die Oberfläche eindringen und/oder auf der Oberfläche aufschmelzen.

Aus der DE 199 02 948 A1 ist ein Verfahren zur Modifizierung von Polymersubstraten durch Oberflächenfixierung eigenschaftsbestimmender Makromoleküle bekannt, bei dem die Oberfläche von Polymersubstraten mittels strahleninduzierter oder thermisch induzierter Pfropfpolymerisation eines Monomers und eines eigenschaftsbestimmenden Polymers realisiert wird, wobei das Polymersubstrat vor der Pfropfung mit dem Polymer mit einer Lösung aus mindestens einem olefinisch gesättigten Monomer, mindestens einem Thermoinitiator und/oder einem Photoinitiator und gegebenenfalls einem Lösungsmittel vorbehandelt wird.

Die Verwendung von Primern zur Oberflächenmodifizierung von Kunststoffen ist ebenfalls bekannt. Die generelle Wirkung von Primer beruht auf der Diffusion einer Lösung aus funktionellen Verbindungen in die Oberflächenschicht von Kunststoffen. Das Lösungsmittel hat die Aufgabe, die Oberflächenschicht zu quellen und so die Diffusion des Primers in die geschaffene offene Polymerstruktur zu ermöglichen. Nach dem Verdampfen des Lösungsmittels bleibt der Primer in der Oberflächenschicht zurück.

Als Primer sind beispielsweise aus der DE 43 16 585 A1 funktionelle Polymere und aus JIYUE YANC et. al.; "Primers for Adhesive Bonding to Polyoietins", Journal of Applied Polymer Science, Vol. 48, 359-370 (1993) niedermolekulare Stoffe bekannt.

Ebenso wird der Einsatz von Silanen als Primer in der DE 600 23 430 T2 vorgeschlagen. Durch chemische Reaktionen kommt es zur Hydrolyse der Silane und nachfolgenden Bildung von Siloxanen sowie zur Vernetzung oder Verankerung der Siloxane.

Nachteilig bei der Anwendung von Primer ist es, dass Lösungsmittel eingesetzt werden müssen und somit die Umwelt belasten. Zudem sind Verfahren zur Oberflächenmodifizierungen mittels Primer aufwendig.

Aus der DE 10 2005 011 594 A1 ist ein Verfahren zur chemischen Modifizierung von Kunststoffoberflächen, insbesondere von Polyolefinoberflächen direkt während und/oder unmittelbar nach einem Formgebungsprozess bekannt, wobei als chemische Substanz mindestens ein niedermolekularer oder polymerer Radikalinitiator oder ein Radikalinitiatorgemisch eingesetzt wird. Der mindestens eine niedermolekulare oder polymere Radikalinitiator oder das Radikalinitiatorgemisch wird mit der Kunststoffoberfläche in Kontakt gebracht, wobei die Radikalbildung thermisch initiiert wird

Der technische Einsatz dieser Lösung wird jedoch durch Nachteile erschwert, die durch die Radikalreaktionen begründet sind. Insbesondere muss es bei diesem Verfahren zu einer Wasserstoffabstraktion im Polyolefin kommen. Die Radikalinitiatoren sind jedoch bei den thermischen Verhältnissen beim Spritzgießen nicht ausreichend reaktiv für eine vollständige Reaktion. Daher tritt auch hier häufig eine Spaltung der Polymerketten im Kunststoff wie auch im Modifikator ein, was die Verbundfestigkeit herabsetzt.

Als Verfahren zur Oberflächenmodifizierung von Kunststoffen, die Butadien-Phasen enthalten, ist das Ätzen mit Chromschwefelsäure bekannt. Dabei werden Butadien-Segmente an der Oberfläche oxidiert, abgespalten und herausgelöst. Die dadurch erzeugte Rauheit der Oberfläche bietet Möglichkeiten für ein mechanisches Verankern einer zweiten Komponente. Das Verfahren wird vor allem für die nasschemische Metallisierung eingesetzt. Da die rein chemische Adhäsion von Metallen und Kunststoffen für eine zuverlässige Beschichtung zu gering ist, wird die Adhäsion dadurch mechanisch verstärkt.

Nachteilig bei diesem Verfahren ist, dass es einerseits nur bei Kunststoffen mit Butadien-Phasen anwendbar ist und andererseits Chromschwefelsäure sehr giftige und umweltschädliche Cr(VI)-Verbindungen enthält. In diesem Zusammenhang ist ab dem Jahr 2017 vorgesehen, dass der Gebrauch von Cr(VI)-Verbindungen in der europäischen Union einer besonderen Genehmigung bedarf. Weiterhin ist nachteilig, dass zwar eine chemische Modifizierung durch Einwirkung der Chromschwefelsäure auf die Kunststoffoberfläche erfolgt, diese aber nicht gesteuert werden kann, sodass oberflächennahen Molekülteile oxidiert und geschädigt werden können.

Aus der DE 3 523 669 A1 ist ein Verfahren zur Metallisierung einer Oberfläche eines Gegenstandes aus einem einen Füllstoff enthaltenden thermoplastischen Kunststoff bekannt, bei dem die Oberfläche eines Gegenstand aus einem thermoplastischen Kunststoff aus einer Gruppe der Polyesterharze und der Polyamidharze mit etwa 5 bis 60 Gew.-% mindestens eines Füllstoffs durch Inkontaktbringen mit einer alkalischen Reinigungslösung und einem Netzmittel die Oberfläche gereinigt und hydrophil wird, anschließend mindestens ein Teil des Füllstoffs von der Oberfläche durch Inkontaktbringen derselben mit einer organischen oder einer Mineralsäure einer Normalität nicht größer als etwa 4,0, welche mindestens einen Teil des Füllstoffs lösen wird, entfernt wird. Anschließend wird auf der Oberfläche, von der der Füllstoff entfernt worden ist, eine elektrisch leitfähige Metallschicht aus mindestens einem Metall der Gruppe Kobalt, Nickel und Kupfer festhaftend stromlos abgeschieden, die stromlos metallisierte Oberfläche erhitzt und auf der trockenen stromlos metallisierten Oberfläche mindestens eine Metallschicht aus Kupfer und/oder Nickel festhaftend galvanisch abgeschieden und darauf mindestens eine Schicht aus Nickel und/oder Chrom galvanisch abgeschieden.

Weiterhin ist aus US 2016/0160436 A1 ein flexibler Formkörper mit einer superhydrophoben Oberfläche bekannt, der im Wesentlichen hergestellt wird, durch Aufrauhen einer Oberfläche einer Form, Beschichten der Oberfläche der Form mit Nanopartikeln, Füllen der Form mit einem Harz, Erwärmen der Form bis zur Vernetzung des Harzes und nachfolgendes Abkühlen. Damit verbleibt nach dem Entformen des Formkörpers mindestens ein Teil der Nanopartikel auf der äußeren Oberfläche des Formkörpers, um eine superhydrophobe Oberfläche bereitzustellen.

Gemäß der WO 2016/142 131 A1 sind modifizierte Materialoberflächen bekannt, bei denen die Oberfläche eines Objektes mit einem Prägewerkzeug geprägt worden ist, welches Mikrosäulen im Bereich von 10 bis 200 µm aufweist, die geprägte Oberfläche mit einem Haftvermittler behandelt und wobei anschließend hydrophobe Partikel mit Partikelgrößen von 0,1 bis 10 µm auf die geprägte Oberfläche aufgebracht worden sind.

Ebenfalls ist nach der US 6 261 697 B1 ein flächiger geschmolzener Artikel aus Polystyren (A) und einer oxidativ löslichen Komponente B bekannt, bei dem Komponente B im Bereich der Oberfläche aus dem Artikel mit oxierend wirkenden Substanzen herausgelöst werden. Ein typisches Beispiel hier ist der Kunststoff ABS.

Nachteilig bei den bekannten Verfahren zur Oberflächenmodifizierung von Kunststoffen ist, dass die Langzeitstabilität der Oberflächenmodifizierung und die Adhäsion für nachfolgende Beschichtungen nicht ausreichend sind. Auch ist nachteilig, dass die bekannten Verfahren zur Modifizierung von Kunststoffoberflächen Einfluss auf die mechanischen Eigenschaften der Kunststoffe haben und zudem aufwendig und kostenintensiv sind.

Die Aufgabe der vorliegenden Erfindung ist es, ein Verfahren zur Modifizierung von Kunststoffoberflächen zur Verfügung zu stellen, mit dem die Modifizierung von Kunststoffoberflächen einfach und kostengünstig realisiert wird. Es ist eine weitere Aufgabe der vorliegenden Erfindung modifizierte Kunststoffoberflächen anzugeben, die eine langzeitstabile Oberflächenmodifizierung aufweisen und gute adhäsive Eigenschaften für nachfolgende Beschichtungen aufweisen.

Die Aufgabe wird durch die in den Ansprüchen angegebene Erfindung gelöst. Vorteilhafte Ausgestaltungen sind Gegenstand der Unteransprüche, wobei die Erfindung auch Kombinationen der einzelnen abhängigen Ansprüche im Sinne einer und-Verknüpfung mit einschließt, solange sie sich nicht gegenseitig ausschließen.

Die erfindungsgemäße Aufgabe wird durch ein Verfahren zur Modifizierung von Kunststoffoberflächen gelöst, bei dem auf die Oberfläche eines Formwerkzeuges mindestens eine Lösung oder Dispersion mindestens teilweise aufgebracht wird, die mindestens eine Modifikatorsubstanz, mindestens ein Lösungs- oder Dispersionsmittel und mindestens ein oder mehrere Hilfsstoffe aufweist, wobei als Modifikatorsubstanz Verbindungen mit reaktiven Gruppen eingesetzt werden, nachfolgend unter Zurückbleiben der mindestens einen Modifikatorsubstanz und der ein oder mehreren Hilfsstoffe das mindestens eine Lösungs- oder Dispersionsmittel aus dem Formwerkzeug entfernt wird, wobei nach dem Entfernen des Lösungs- oder Dispersionsmittels die ein oder mehreren Hilfsstoffe als Partikel, Kristallit oder strukturierter Körper vorliegen, danach mindestens ein Kunststoff als Schmelze mindestens im Bereich der Modifikatorsubstanz und des oder der Hilfsstoffe in das Formwerkzeug eingebracht wird, und danach der geformte Kunststoff aus dem Formwerkzeug entformt wird, wobei während der Formgebung oder nachfolgend die Modifikatorsubstanzen mit den reaktiven Gruppen kovalente Bindungen mit der Kunststoffoberfläche eingehen, und anschließend zur Erzeugung mindestens einer Kavität der oder die Hilfsstoffe aus der Oberfläche des geformten Kunststoffes mindestens teilweise entfernt werden.

Vorteilhafterweise werden als Kunststoff Acrylnitril-Butadien-Styrol (ABS), Polyamid (PA), Polylactid (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK), Polyvinylchlorid (PVC) und/oder Blends davon eingesetzt.

Ebenso ist es vorteilhaft, wenn die Lösung oder Dispersion durch Spray-Coating, Dip-Coating, Drucken, Streichen und/oder Walzen auf die Oberfläche des Formwerkzeuges aufgebracht wird.

Als Modifikatorsubstanz werden in vorteilhafter Weise Diethanolamin, Diethylentriamin, Dipropylentriamin, Ethanolamin, Glycerin, Hexamethylendiamin, Maleinsäureanhydridcopolymere, Oligoacrylate, Isocyanat-terminierte Oligourethane, Oligoacrylsäure, Oligoester, Oligoacrylsäureglycolester, Oligovinylsäure, Oligoacrylethanolamid, Pentaerythrith, Polyamidamin, Polyethylenimin, Polyacrylsäure, Polyacrylate, Polyacrylethanolamid, Polyacrylsäureglycolester, Polyvinylalkohol, Epoxy-modifizierte Bisphenol- und/oder Novolakverbindungen eingesetzt.

Als Lösungs- oder Dispersionsmittel werden vorteilhaft Wasser, wässrige Säuren oder Basen, anorganische und/oder organische Lösungsmittel eingesetzt, wobei insbesondere als organische Lösungsmittel Alkohole, Ketone, Ester und/oder Kohlenwasserstoffe eingesetzt werden.

Vorteilhafterweise wird der Hilfsstoff in gelöster Form, als Partikel, Konglomerat und/oder als strukturierter Körper eingesetzt.

In einer vorteilhaften Ausführung werden Hilfsstoffe eingesetzt, die eine höhere Schmelztemperatur als die Temperatur der Kunststoffschmelze aufweisen.

Ebenfalls ist es vorteilhaft, wenn als Hilfsstoffe lösliche Polymere, lösliche anorganische und/oder lösliche organische Stoffe eingesetzt werden, wobei als lösliches Polymer vorteilhaft Polyvinylamin, Polyallylamin, Polyacrylsäure, Salze der Polyacrylsäure und/oder Polyvinylalkohol eingesetzt wird.

Als lösliche anorganische und/oder lösliche organische Stoffe werden vorteilhafterweise ein Salz, ein Metalloxid, ein Eisenoxid, Mischoxide mit 2 oder mehreren Metallen und /oder eine organische Verbindung eingesetzt, wobei insbesondere CaCO₃, NaCl, ZnO, Terephthalsäure und/oder Cyanursäure vorteilhafterweise eingesetzt wird.

Besonders vorteilhaft ist, wenn der Kunststoff als Schmelze mittels Spritzgießen, Schmelzeschichtung und/oder Heißpressen in das Formwerkzeug eingebracht wird.

Vorteilhafterweise werden die Hilfsstoffe vollständig aus den in der Oberfläche des Kunststoffes erzeugten Kavitäten entfernt.

Die Hilfsstoffe werden vorteilhafterweise mittels Lösungsmittel, Ätzverfahren, Druckluftverfahren und/oder Sublimation entfernt werden.

Außerdem ist es vorteilhaft, wenn 30% bis 80%, insbesondere 40% bis 70 % der Kunststoffoberfläche durch Hilfsstoffe modifiziert werden.

Die erfindungsgemäße Aufgabe wird zudem durch modifizierte Kunststoffoberflächen gelöst, die nach dem erfindungsgemäßen Verfahren hergestellt worden sind, bei denen der Kunststoff im Oberflächenbereich Strukturierungen in Form von zur Oberfläche hin offenen Kavitäten mit und ohne Hinterschneidungen aufweist und die innere und äußere Oberfläche des Kunststoffes mit Kavitäten und Hinterschneidungen im Wesentlichen vollständig mit einer oder mehreren Modifikatorsubstanzen beschichtet ist, deren reaktive Gruppen mit der Kunststoffoberfläche kovalente Bindungen eingegangen sind.

Dabei ist es vorteilhaft, wenn 30% bis 80%, insbesondere 40% bis 70 % der Kunststoffoberfläche durch Hilfsstoffe modifiziert sind.

In einer vorteilhaften Ausführungsform ist auf den modifizierten Kunststoffoberflächen eine zusätzliche Schicht angeordnet, die mindestens teilweise in die Kavitäten eingedrungen ist.

Erfindungsgemäß wird ein einfaches und kostengünstiges Verfahren zur Modifizierung von Kunststoffoberflächen bereitgestellt, mit dem modifizierte Kunststoffoberflächen hergestellt werden, die einen höheren Modifizierungseffekt, eine verbesserte Langzeitstabilität der Oberflächenmodifizierung und eine verbesserte Adhäsion für nachfolgende Beschichtungen aufweisen.

Erreicht wird dies durch ein Verfahren, bei dem erfindungsgemäß im ersten Schritt auf die Oberfläche eines Formwerkzeuges mindestens eine Lösung oder Dispersion aufgebracht wird. Dabei ist es möglich, die Lösung oder Dispersion entweder vollständig oder auch nur teilweise auf die Oberfläche des Formwerkzeuges aufzubringen. Durch das teilweise Aufbringen der Lösung oder Dispersion auf die Oberfläche des Formwerkzeuges wird erreicht, dass nur Teilbereiche der Oberfläche des Formteiles modifiziert werden.

Erfindungsgemäß enthält die mindestens eine Lösung oder Dispersion mindestens eine Modifikatorsubstanz, mindestens ein oder mehrere Hilfsstoffe und mindestens ein Lösungs- oder Dispersionsmittel.

Die mindestens ein oder mehreren Hilfsstoffe können dabei in gelöster Form im Lösungs- oder Dispersionsmittel vorliegen. Möglich ist es auch, dass die ein oder mehreren Hilfsstoffe als Partikel oder als strukturierter Körper vorliegen, wobei der strukturierte Körper beispielsweise ein Filament sein kann.

Vorteilhaft für die vorliegende Erfindung ist, wenn die in der Dispersion vorhandenen Hilfsstoffe einerseits eine möglichst unregelmäßige Oberfläche aufweisen und andererseits in jedem Fall die Oberfläche der Hilfsstoffe mit der Modifikatorsubstanz ganz oder teilweise bedeckt ist. Dabei können auch Konglomerate von Hilfsstoffen vorliegen, die dann insgesamt mit der Modifikatorsubstanz im Wesentlichen vollständig umhüllt sind.

Ebenfalls vorteilhaft ist, wenn Hilfsstoffe eingesetzt werden, die eine höhere Schmelztemperatur als die Schmelzetemperatur des Kunststoffes aufweisen. Damit wird erreicht, dass beim Einspritzen der Kunststoffschmelze und dem Kontakt mit der Kunststoffschmelze die Hilfsstoffe ihre ursprüngliche Form beibehalten und die Ausbildung der Kavitäten und damit die Modifizierung der Kunststoffoberfläche erfolgt.

Sofern die Hilfsstoffe im Lösungsmittel in gelöster Form vorliegen, werden nach dem Aufbringen der Lösung auf die Oberfläche eines Formwerkzeuges in einem Spritzgießprozess und dem nachfolgenden Entfernen des Lösungsmittels ein oder mehrere Hilfsstoffe in Form von Kristallen gebildet, die einzeln oder als Konglomerate im Wesentlichen vollständig von der Modifikatorsubstanz umhüllt sind.

Mit der vorliegenden Erfindung ist es auch möglich, dass in verschiedenen Teilbereichen der Oberfläche des Formwerkzeuges unterschiedliche Lösungen und/oder Dispersionen mit unterschiedlichen Modifikatorsubstanzen und/oder Hilfsstoffen und/oder Lösungs- oder Dispersionsmitteln aufgebracht werden. Damit wird erreicht, dass die Oberfläche des Kunststoffes in verschiedenen Teilbereichen unterschiedlich modifiziert wird, wodurch die Modifizierung auf die jeweiligen Erfordernisse der nachfolgenden Anwendungen individuell abgestimmt werden kann.

Vorteilhafterweise werden als ein oder mehrere Hilfsstoffe Polymere, lösliche anorganische und/oder lösliche organische Materialien eingesetzt. Als lösliches Polymer kann vorteilhafterweise Polyvinylamin, Polyallylamin, Polyacrylsäure, ein Salz der Polyacrylsäure und/oder Polyvinylalkohol als Partikel eingesetzt werden.

Möglich ist auch, dass als ein oder mehrere lösliche Hilfsstoffe lösliche anorganische und/oder lösliche organische Stoffe, insbesondere ein Salz, ein Metalloxid, ein Eisenoxid, Mischoxide mit 2 oder mehreren Metallen und /oder eine organische Verbindung eingesetzt werden.

Ein besonders einfaches und leichtes Entfernen der Hilfsstoffe ist auch dann möglich, wenn CaCO₃, NaCl, ZnO, Terephthalsäure und/oder Cyanursäure als Hilfsstoff eingesetzt wird.

Möglich ist auch, dass als Hilfsstoff ein strukturierter Körper, beispielsweise ein Filament, eingesetzt wird, der bereits von der Modifikatorsubstanz umhüllt ist. Durch den Einsatz eines strukturierten Körpers wird es möglich, eine definierte Mikrokavität in der Kunststoffoberfläche an einer vorbestimmten Stelle zu erzeugen. Nach dem Entfernten des strukturierten Körpers ist es beispielsweise möglich, die Formteile in der Mikrofluidik einzusetzen, wobei die Modifizierung der inneren Oberfläche mit Aminogruppen z.B. zur Akkumulation von sauren Proteinen genutzt werden kann.

Erfindungswesentliches Merkmal ist es, dass die ein oder mehreren Hilfsstoffe löslich, herauslösbar oder reaktiv löslich sind, damit sie nach dem Formgebungsprozess von der Kunststoffoberfläche mindestens teilweise wieder entfernt werden können.

Als Modifikatorsubstanz werden solche Verbindungen eingesetzt, die reaktive Gruppen aufweisen. Die Modifikatorsubstanz mit den reaktiven Gruppen geht mit den Kunststoffoberfläche während der Formgebung im Spritzgießprozess oder nachfolgend kovalente Bindungen ein. Damit wird erreicht, dass die Oberfläche des Kunststoffes besonders vorteilhaft modifiziert und eine Schädigung der Kunststoffoberfläche vermieden wird.

Als Modifikatorsubstanz können vorteilhafterweise Diethanolamin, Diethylentriamin, Dipropylentriamin, Ethanolamin, Glycerin, Hexamethylendiamin, Maleinsäureanhydridcopolymere, Oligoacrylate, Isocyanat-terminierte Oligourethane, Oligoacrylsäure, Oligoester, Oligoacrylsäureglycolester, Oligovinylsäure, Oligoacrylethanolamid, Pentaerythrith, Polyamidamin, Polyethylenimin, Polyacrylsäure, Polyacrylate, Polyacrylethanolamid, Polyacrylsäureglycolester, Polyvinylalkohol, Epoxy-modifizierte Bisphenol- und/oder Novolakverbindungen eingesetzt werden.

Die erzeugten Hinterschneidungen in den Kavitäten führen zu einer besonders guten Haftung einer nachfolgend aufgebrachten Beschichtung auf der erfindungsgemäß modifizierten Kunststoffoberfläche.

Als Lösungs- oder Dispersionsmittel können beispielsweise Wasser, anorganische und/oder organische Lösungsmittel eingesetzt werden, wobei sich herausgestellt hat, dass insbesondere mit Alkoholen, Ketonen, Estern und/oder Kohlenwasserstoffen besonders vorteilhaft ist.

Erfindungsgemäß wird die Lösung oder Dispersion auf die Oberfläche des Formwerkzeuges vor dem Einspritzen der Kunststoffschmelze aufgebracht. Das Aufbringen kann beispielwiese mittels Spray-Coating, Dip-Coating, Drucken, Streichen und/oder Walzen auf eine oder mehrere Oberflächen des Formwerkzeuges erfolgen. Insbesondere die Auswahl der ein oder mehreren Hilfsstoffe in der Lösung hat Einfluss auf die Auswahl des Verfahrens für das Aufbringen der Lösung oder Dispersion. So konnte beispielsweise bei löslichen Polymeren als Hilfsstoff herausgefunden werden, dass mittels Spray-Coating aufgebrachte Schichten unregelmäßige und fein kristalline Ablagerungen auf der Oberfläche des Formwerkzeuges aufweisen, die für die Bildung der Kavitäten in der Kunststoffoberfläche besonders vorteilhaft sind.

Nach dem Auftragen der Lösung oder Dispersion wird das Lösungs- oder Dispersionsmittel aus dem Formwerkzeug entfernt. Das Entfernen kann beispielsweise durch Verdunsten des Lösungs- oder Dispersionsmittels bei Raumtemperatur realisiert werden. Möglich ist aber auch, dass das Formwerkzeug für den anschließenden Formgebungsprozess beheizt wird, wodurch das Lösungs- oder Dispersionsmittel schneller verdunstet und aus dem Formwerkzeug entfernt wird. Es wurde festgestellt, dass sich bei in Lösung vorliegenden Hilfsstoffen beim Entfernen des Lösungsmittels Kristallite auf der Oberfläche des Formwerkzeuges bilden, die die Bildung von Kavitäten zusätzlich begünstigen.

Nach dem Entfernen des Lösungs- oder Dispersionsmittels verbleiben auf der Oberfläche des Formwerkzeuges die mindestens eine Modifikatorsubstanz sowie die ein oder mehreren Hilfsstoffe, die im Wesentlichen von der mindestens einen Modifikatorsubstanz umhüllt sind und als Partikel, Kristallite oder als strukturierte Körper vorliegen.

Nach dem Entfernen des Lösungs- oder Dispersionsmittels und dem Schließen des Formwerkzeuges wird der Kunststoff als Schmelze in das Formwerkzeug eingebracht. So ist es beispielsweise möglich, die Schmelze mittels Spritzgießen, Schmelzeschichtung und/oder Heißpressen in das Formwerkzeug einzubringen. Als Kunststoffe werden Materialien eingesetzt, die thermoplastische Eigenschaften aufweisen und deren Formgebung als Schmelze realisiert werden kann.

Vorteilhafterweise werden Acrylnitril-Butadien-Styrol (ABS), Polyamid (PA), Polylactid (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK), Polyvinylchlorid (PVC) und/oder Blends davon eingesetzt.

Mit dem Füllen des Formwerkzeuges mit der einfließenden Kunststoffschmelze wird der Kunststoff mit den Hilfsstoffen sowie der Modifikatorsubstanz innerhalb des Formwerkzeuges in Kontakt gebracht, wodurch die reaktiven Gruppen der Modifikatorsubstanz an der Oberfläche des Kunststoffes gebunden werden.

Unter Ausnutzung der Temperatur des Formwerkzeuges und der Kunststoffschmelze werden die Modifikatorsubstanzen über die reaktiven Gruppen besonders gut an die Schmelzeoberfläche des Kunststoffes gekoppelt. Zudem wird das erfindungsgemäße Verfahren vorteilhaft dafür eingesetzt, dass die Schmelze gegenüber dem gut wärmeleitenden Formwerkzeug durch die Partikel thermisch isoliert ist. Selbst bei einem geringen Durchmesser der Hilfsstoffe und damit einer geringen thermischen Isolationsschichtdicke konnte eine um ein Vielfaches erhöhte Reaktionszeit der reaktiven Gruppen der Modifikatorsubstanz mit der Kunststoffoberfläche festgestellt werden, wodurch eine wesentlich verbesserte Modifizierung der Oberfläche des Kunststoffes erreicht wird.

Überraschenderweise konnte herausgefunden werden, dass die auf einer Oberfläche des Formwerkzeuges angeordneten ein oder mehreren Hilfsstoffe sowie die mindestens eine Modifikatorsubstanz vor und während des Kontaktes mit der Kunststoffschmelze ortsfest an der jeweiligen Oberfläche des Formwerkzeuges verbleiben. Damit ist sichergestellt, dass die Modifizierung der Kunststoffoberfläche mit dem Einbringen der Kunststoffschmelze in die gewünschten Bereiche der Oberfläche realisiert wird.

Weiterhin ist durch das ortsfeste Verbleiben der ein oder mehreren Hilfsstoffe auf der Oberfläche des Formwerkzeuges gesichert, dass die Modifizierung auch auf der inneren Oberfläche der Kavitäten, auch in Hinterschneidungen, und auch an der äußeren Oberfläche der Kunststoffe möglichst vollständig vorhanden ist.

Während es Formgebungsprozesses werden die ein oder mehreren Hilfsstoffe mit der Oberfläche des Kunststoffes während des Formgebungsprozesses in Kontakt gebracht und an, auf und/oder in die Oberfläche des Kunststoffes eingebracht. Dadurch entstehen an, auf und/oder in der Oberfläche des Kunststoffes Kavitäten, die noch mit den Hilfsstoffen gefüllt sind. Die Form, Größe, Anzahl und Verteilung der Kavitäten wird durch Form, Größe, Anzahl und Verteilung der auf der Oberfläche des Formwerkzeuges applizierten ein oder mehreren Hilfsstoffe bestimmt.

Die Oberfläche der Kavitäten mit und ohne Hinterschneidungen, die durch die ein oder mehreren Hilfsstoffe entstanden sind, ist im Rahmen der Erfindung als innere Oberfläche zu verstehen, während als äußere Oberfläche alle anderen Oberflächen des geformten Kunststoffes verstanden werden sollen, die keine Kavitäten mit und ohne Hinterschneidungen aufweisen.

Um eine besonders gute Modifizierung der Kunststoffoberfläche zu erreichen, ist es insbesondere für die Haftfestigkeit einer auf der Kunststoffoberfläche nachfolgend angeordneten Beschichtung von Vorteil, wenn 30% bis 80%, und ganz besonders vorteilhaft 40% bis 70% der Kunststoffoberfläche durch Hilfsstoffe modifiziert sind. Damit wird erreicht, dass einerseits eine ausreichende Anzahl von Kavitäten in der Kunststoffoberfläche für eine besonders gute Verankerung einer weiteren Schicht auf der Kunststoffoberfläche vorhanden ist. Anderseits liegt ein ausgewogenes Verhältnis von inneren und äußeren Oberflächen des Kunststoffes vor, wodurch eine hohe Qualität einer nachfolgend aufgebrachten Beschichtung auf der modifizierten Kunststoffoberfläche sicherstellt. Die so modifizierten Kunststoffoberflächen können dann eine zusätzliche Beschichtung aufweisen, die mindestens teilweise in die Kavitäten eingedrungen und verankert ist.

Zudem konnte festgestellt werden, dass die Größe der Kavitäten von den Prozessparametern während des Formgebungsprozesses, wie beispielsweise der Schmelzeviskosität, der Einspritzgeschwindigkeit oder auch der Grenzflächenspannung zwischen Formwerkzeug, Hilfsstoff und Schmelze beeinflusst werden kann.

Nach dem Formgebungsprozess wird der geformte Kunststoff aus dem Formwerkzeug entformt und anschließend die ein oder mehreren Hilfsstoffe mindestens teilweise, vorteilhafterweise vollständig, von der Kunststoffoberfläche entfernt.

Das Entfernen der Hilfsstoffe kann beispielsweise mittels Lösungsmittel, Ätzverfahren, Druckluftverfahren und/oder Sublimation realisiert werden. Als Lösungsmittel können beispielsweise Wasser, wässrige Säuren, Basen, anorganische und/oder organische Lösungsmittel, das den Kunststoff nicht angreift, eingesetzt werden. Vorteilhafterweise kann als Lösungsmittel das für die Lösung oder Dispersion eingesetzte Lösungs- oder Dispersionsmittel eingesetzt werden.

Das Entfernen der ein oder mehreren Hilfsstoffe kann beispielsweise auch derart erfolgen, das Partikel oder strukturierte Körper ohne Modifikatorsubstanz in unveränderter Form aus der Oberfläche herausgelöst werden. Möglich ist aber auch, die ein oder mehreren Hilfsstoffe durch das Lösungsmittel, beispielsweise eine verdünnte wässrige Salzsäure zu zersetzen und dadurch zu entfernen.

Vorteilhafterweise werden der oder die Hilfsstoffe vollständig von der Oberfläche des Kunststoffes entfernt. Damit wird insbesondere erreicht, dass keine Anteile des Hilfsstoffes in der jeweiligen Kavität verbleiben und das volle Volumen der Kavität zur Verfügung steht. Dadurch wird eine bessere Anbindung einer nachfolgenden Beschichtung ermöglicht, die zu einer besonders hohen Haftfestigkeit der Schicht auf der Kunststoffoberfläche führt.

Insbesondere durch den Einsatz wasserlöslicher Polymere, wasserlöslicher anorganischer und/oder wasserlöslicher organischer Materialien als lösliche Hilfsstoffe kann ein besonders einfaches und kostengünstiges Entfernen der Hilfsstoffe von der modifizierten Kunststoffoberfläche ermöglicht werden.

Die in den Kavitäten vorhandenen Hilfsstoffe werden aufgelöst oder herausgelöst und die gelösten Hilfsstoffe mit dem Lösungsmittel oder anderen Medien aus den Kavitäten entfernt. Dabei ist von besonderer Bedeutung, dass nach dem Entfernen der Hilfsstoffe die innere Oberfläche der Kavitäten und die äußerer Oberfläche des Kunststoffes an den Stellen, an denen die Lösung oder Dispersion im Formwerkzeug vorhanden gewesen ist, noch mindestens eine oder mehrere Modifikatorsubstanzen aufweist.

Dabei ist für die erfindungsgemäß modifizierten Kunststoffoberflächen erfindungswesentlich, dass im Unterschied zu den Lösungen des Standes der Technik die innere Oberfläche der Kavitäten und insbesondere auch die Hinterschneidungen mit einer oder mehreren Modifikatorsubstanzen beschichtet sind.

Das erfindungsgemäße Verfahren zur Modifizierung von Kunststoffoberflächen ist besonders einfach und kostengünstig zu realisieren. Außerdem werden zur Modifizierung umweltfreundliche Materialen eingesetzt, die eine Belastung der Umwelt verhindern. Zudem lassen sich kostengünstige und in großen Mengen vorrätige Materialien für die Modifizierung der Kunststoffoberflächen bei einem Spritzgießverfahren verwenden.

Die erfindungsgemäßen modifizierten Kunststoffoberflächen weisen nach ihrer Herstellung eine permanente Beschichtung mit Modifikatorsubstanzen auf den gewünschten inneren und äußeren Oberflächen auf, die haftfest und langzeitstabil sind, so dass eine Weiterverarbeitung der oberflächenmodifizierten Kunststoffe auch mit einer Zwischenlagerung erfolgen kann.

Die erfindungsgemäß modifizierten Kunststoffoberflächen weisen vor ihrer Weiterverarbeitung eine hohe Mikrorauheit der Oberfläche auf, die einerseits durch das Formwerkzeug im Spritzgießverfahren, aber erfindungsgemäß insbesondere durch die zusätzlichen Kavitäten aufgrund der im Formgebungsprozess vorhandenen Hilfsstoffe, erreicht wird. Die Kavitäten ermöglichen einen besonders stabilen und festen Verbund beispielsweise mit einer auf der modifizierten Kunststoffoberfläche angeordneten weiteren Kunststoffkomponente, wodurch eine besonders gute Adhäsion einer auf die modifizierte Kunststoffoberfläche aufgebrachten Schicht oder Komponente erreicht wird.

Außerdem ist es das erfindungsgemäße Verfahren dahingehend von Vorteil, dass die Modifizierung an den inneren Oberflächen des Kunststoffes sehr gezielt durch die Auswahl der Modifikatorsubstanz gesteuert werden kann.

Die Erfindung soll anhand der nachfolgenden Ausführungsbeispiele näher erläutert werden.

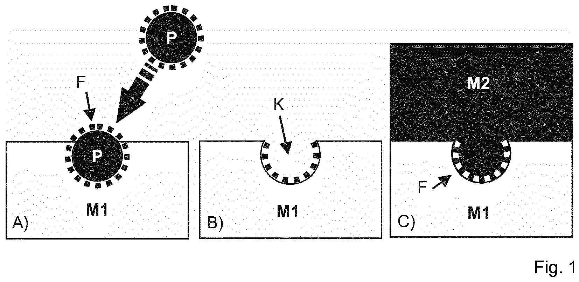

Dabei zeigt Figur 1:
A) ein in der Kunststoffoberfläche eingebettetes Hilfsstoffpartikel, das selbst eine Beschichtung mit einer Modifikatorsubstanz aufweist,
B) eine modifizierte Kunststoffoberfläche, bei der durch die Entfernung des Hilfsstoffpartikels eine Mikrokavität vorliegt, wobei die innere Oberfläche der Mikrokavität mit der Modifikatorsubstanz funktionalisiert ist, und
C) eine modifizierte Kunststoffoberfläche mit Beschichtung.

### Beispiel 1

0,5 g eines Pulvers aus CaCO₃ als Hilfsstoff und mit einer volumetrischen Partikelgrößenverteilung von D₅₀ = 800 nm wird in 49,5 ml einer wässrigen Lösung, die als Modifikatorsubstanz 1 Ma% Polyethylenimin (PEI) mit einer mittleren Molmasse von 60000 g/mol enthält, für 10 min eingerührt, wodurch eine stabile Dispersion aus den CaCO₃-Partikeln mit adsorbierten PEI-Molekülen erhalten wird. 2 ml dieser Dispersion werden auf die Oberfläche eines als Substrat dienenden und auf 80°C erwärmten Stahlplättchens mit den Abmessungen 0̸ = 50 mm, d = 0,5 mm mit einer Schichtdicke von mindestens der volumetrischen Partikelgrößenverteilung aufgesprüht. Nach dem vollständigen Verdunsten des Wassers nach 10 s wird das Substrat in das Formwerkzeug einer Spritzgießmaschine angeordnet, das Formwerkzeug geschlossen und 6 g einer Polycarbonatschmelze mit einer Schmelzetemperatur von 270 °C, einer Formwerkzeugtemperatur von 80 °C und einer Geschwindigkeit von 50 mm/s eingespritzt. Nach dem Erstarren der Polycarbonatschmelze wird der geformte Kunststoff aus dem Formwerkzeug der Spritzgießmaschine entnommen. Anschließend wird der geformte Kunststoff für 5 min in eine Lösung aus HCl mit einer Konzentration von 0.01 M vollständig eingetaucht. Während des Eintauchens werden die Partikel unter Bildung von C0₃²⁻-und Ca²⁺-Ionen von der Oberfläche des geformten Kunststoffes gelöst und entfernt.

Nunmehr liegt ein geformter Kunststoff mit einer modifizierten Oberfläche im Bereich des Stahlplättchens mit Kavitäten mit und ohne Hinterschneidungen anstelle der entfernten CaCO₃-Partikel vor. Die modifizierten Oberflächen weisen eine durchgehende Funktionalisierung aus PEI auf, die kovalent an den Kunststoff gebunden ist. Diese Funktionalisierung mit PEI besteht auch innerhalb der Kavitäten und ist permanent und langzeitstabil und auch nach einer Lagerung von 10 Tagen vollständig vorhanden.

### Beispiel 2

0,5 g eines Pulvers aus NaCl als Hilfsstoff wird in 49,5 ml einer wässrigen Lösung, die als Modifikatorsubstanz 1 Ma% Polyethylenimin (PEI) mit einer mittleren Molmasse von 60000 g/mol aufweist, für 10 min eingerührt, wodurch eine stabile Lösung aus NaCl und Polyethylenimin-Molekülen vorliegt. Ein als Substrat dienendes Stahlplättchen mit den Abmessungen 0̸ = 50 mm, d = 0,5 mm wird mit 2 ml der stabilen Lösung besprüht und nach dem vollständigen Verdunsten des Wassers nach 10 s im Formwerkzeug einer Spritzgießmaschine angeordnet. Anschließend wird das Formwerkzeug geschlossen und 6 g einer Polycarbonatschmelze mit einer Schmelzetemperatur von 270 °C, einer Formwerkzeugtemperatur von 80 °C und einer Geschwindigkeit von 50 mm/s eingespritzt. Nach dem Erstarren der Polycarbonatschmelze wird der geformte Kunststoff aus dem Formwerkzeug der Spritzgießmaschine entnommen. Der geformte Kunststoff wird für 5 min in Wasser gewaschen. Während des Waschens lösen sich die NaCI-Partikel auf und sind damit von der Oberfläche des geformten Kunststoffes entfernt.

Nunmehr liegt ein geformter Kunststoff mit einer modifizierten Oberfläche im Bereich des Stahlplättchens mit Kavitäten mit und ohne Hinterschneidungen anstelle der vorhandenen NaCI-Partikel vor. Die modifizierten Oberflächen weisen eine durchgehende Funktionalisierung aus Polyethylenimin auf, die kovalent an den Kunststoff gebunden ist. Diese Beschichtung mit Polyethylenimin ist permanent und langzeitstabil und auch nach einer Lagerung von 10 Tagen vollständig vorhanden.

### Beispiel 3

0,5 g eines Pulvers aus ZnO als Hilfsstoff wird in 49,5 ml wässrigen Lösung, die als Modifikatorsubstanz 1 Ma% Polyethylenimin (PEI) mit einer mittleren Molmasse von 60000 g/mol aufweist, für 10 min eingerührt, wodurch eine stabile Dispersion aus ZnO-Partikeln mit auf der Oberfläche adsorbierten PEI-Molekülen vorliegt. Die Dispersion wird auf die Oberfläche eines Formwerkzeuges einer Spritzgießmaschine durch Sprühen appliziert, nach Verdunsten des Wassers das Formwerkzeug geschlossen und 6 g einer Polyetheretherketonschmelze mit einer Schmelzetemperatur von 380°C, einer Formwerkzeugtemperatur von 160 °C und einer Geschwindigkeit von 50 mm/s eingespritzt. Nach dem Erstarren der Polyetheretherketonschmelze wird der geformte Kunststoff aus dem Formwerkzeug der Spritzgießmaschine entnommen. Der geformte Kunststoff wird für 5 min in 1 N wässriger HCl gewaschen. Während des Waschens gehen die ZnO-Partikel als Salz in Lösung und sind damit von der Oberfläche des geformten Kunststoffes entfernt.

Nunmehr liegt ein geformter Kunststoff mit einer modifizierten Oberfläche im Bereich des Stahlplättchens mit Kavitäten mit und ohne Hinterschneidungen anstelle der vorhandenen ZnO-Partikel vor. Die modifizierten Oberflächen weisen eine durchgehende Funktionalisierung aus Polyethylenimin auf, die kovalent an den Kunststoff gebunden ist. Diese Beschichtung mit Polyethylenimin ist permanent und langzeitstabil und auch nach einer Lagerung von 10 Tagen vollständig vorhanden.

### Beispiel 4

4 ml einer kolloiden Lösung aus aminomodifizierten Polystyrolpartikeln (25mg/ml; micromer der Fa. micromod Partikeltechnologie GmbH) wird in 46 ml einer wässrigen Lösung, die als Modifikatorsubstanz 0,1 Ma% Polyacrylsäure mit einer mittleren Molmasse von 450000 g/mol aufweist, für 10 min eingerührt, wodurch eine stabile Dispersion aus aminomodifizierten Polystyrolpartikeln, umhüllt von Polyacrylsäure, vorliegt. Die Dispersion wird durch Sprühen auf die Oberfläche eines Formwerkzeuges eines Spritzgießwerkzeug appliziert. Nach dem vollständigen Verdunsten des Wassers nach 10 s wird das Formwerkzeug geschlossen und 6 g einer Polyamid 6-Schmelze mit einem Druck von 6 · 10⁶ Pa, einer Schmelzetemperatur von 250 °C, einer Formwerkzeugtemperatur von 60 °C und einer Geschwindigkeit von 50 mm/s eingespritzt. Nach dem Erstarren der Polyamid 6-Schmelze wird der geformte Kunststoff aus dem Formwerkzeug der Spritzgießmaschine entnommen. Der geformte Kunststoff wird für 5 min in Chloroform gewaschen. Während des Waschens lösen sich die Polystyrolpartikel auf und sind damit von der Oberfläche des geformten Kunststoffes entfernt.

Nunmehr liegt ein geformter Kunststoff mit einer modifizierten Oberfläche mit Kavitäten mit und ohne Hinterschneidungen anstelle der entfernten Polyacrylsäure-Partikel vor. Die modifizierten inneren und äußeren Oberflächen weisen eine durchgehende Funktionalisierung aus Polyacrylsäure auf, die kovalent an den Kunststoff gebunden ist. Diese Funktionalisierung ist permanent und langzeitstabil und auch nach einer Lagerung von 10 Tagen vollständig vorhanden.

### Beispiel 5

20 ml einer kolloiden Lösung aus Chitosanpartikeln (25 mg/ml) mit einer volumetrischen Partikelgrößenverteilung von D₅₀ = 1000 nm wird in 30 ml einer wässrigen Lösung, die als Modifikatorsubstanz 0,1 Ma% Polyacrylsäure mit einer mittleren Molmasse von 450000 g/mol aufweist, 10 min gerührt, wodurch eine stabile Dispersion aus Chitosanpartikeln, umhüllt von Polyacrylsäure, vorliegt. Die Dispersion wird durch Sprühen auf die Oberfläche des Formwerkzeuges appliziert. Nach dem vollständigen Verdunsten des Wassers nach 10 s wird das Formwerkzeug geschlossen und 6 g einer Polyamid 6-Schmelze mit einem Druck von 6 · 10⁶ Pa, einer Schmelzetemperatur von 250 °C, einer Formwerkzeugtemperatur von 60 °C und einer Geschwindigkeit von 50 mm/s eingespritzt. Nach dem Erstarren der Polyamid 6-Schmelze wird der geformte Kunststoff aus dem Formwerkzeug der Spritzgießmaschine entnommen. Der geformte Kunststoff wird für 5 min in eine 0.1 N wässrige HCl-Lösung getaucht, wodurch sich die Chitosanpartikel auflösen und damit von der Oberfläche des geformten Kunststoffes entfernt sind.

### Beispiel 6

Ein Filament aus Polyvinylalkohol mit einem Hydrolysegrad von 89 % und einem Durchmesser von 10 µm wird mit einer wässrigen Lösung, die als Modifikatorsubstanz 1 Ma% Polyethylenimin (PEI) mit einer mittleren Molmasse von 60000 g/mol enthält, in Kontakt gebracht, wobei das PEI am Polyvinylalkohol adsorbiert. Anschließend wird das Filament mit Wasser abgespült und nachfolgend getrocknet. Das Filament wird auf einem Substrat aus Stahl mit den Abmessungen 0̸ = 50 mm, d = 0,5 mm fixiert und das Substrat mit dem Filament in der Kavität einer Spritzgießmaschine angeordnet. Nachfolgend werden 6 g einer Polycarbonatschmelze mit einer Schmelzetemperatur von 270 °C, einer Formwerkzeugtemperatur von 80 °C und einer Geschwindigkeit von 50 mm/s eingespritzt. Nach Erstarren des Kunststoffs wird das Formteil entnommen und eine Stunde in Wasser bei einer Temperatur von 80°C getaucht, wodurch sich das Filament aus Polyvinylalkohol vollständig auflöst.

### Bezugszeichenliste

- M1 -: Kunststoffoberfläche
- M2 -: zusätzliche Schicht
- P -: Hilfsstoff
- F -: Modifikatorsubstanz
- K -: Kavität

## Patentansprüche

1. Verfahren zur Modifizierung von Kunststoffoberflächen, bei dem auf die Oberfläche eines Formwerkzeuges mindestens eine Lösung oder Dispersion mindestens teilweise aufgebracht wird, die mindestens eine Modifikatorsubstanz, mindestens ein Lösungs- oder Dispersionsmittel und mindestens ein oder mehrere Hilfsstoffe aufweist, wobei als Modifikatorsubstanz Verbindungen mit reaktiven Gruppen eingesetzt werden, nachfolgend unter Zurückbleiben der mindestens einen Modifikatorsubstanz und der ein oder mehreren Hilfsstoffe das mindestens eine Lösungs- oder Dispersionsmittel aus dem Formwerkzeug entfernt wird, wobei nach dem Entfernen des Lösungs- oder Dispersionsmittels die ein oder mehreren Hilfsstoffe als Partikel, Kristallit oder strukturierter Körper vorliegen, danach mindestens ein Kunststoff als Schmelze mindestens im Bereich der Modifikatorsubstanz und des oder der Hilfsstoffe in das Formwerkzeug eingebracht wird, und danach der geformte Kunststoff aus dem Formwerkzeug entformt wird, wobei während der Formgebung oder nachfolgend die Modifikatorsubstanzen mit den reaktiven Gruppen kovalente Bindungen mit der Kunststoffoberfläche eingehen, und anschließend zur Erzeugung mindestens einer Kavität der oder die Hilfsstoffe aus der Oberfläche des geformten Kunststoffes mindestens teilweise entfernt werden.

2. Verfahren nach Anspruch 1, bei dem als Kunststoff Acrylnitril-Butadien-Styrol (ABS), Polyamid (PA), Polylactid (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK), Polyvinylchlorid (PVC) und/oder Blends davon eingesetzt werden.

3. Verfahren nach Anspruch 1, bei dem die Lösung oder Dispersion durch Spray-Coating, Dip-Coating, Drucken, Streichen und/oder Walzen auf die Oberfläche des Formwerkzeuges aufgebracht wird.

4. Verfahren nach Anspruch 1, bei dem als Modifikatorsubstanz Diethanolamin, Diethylentriamin, Dipropylentriamin, Ethanolamin, Glycerin, Hexamethylendiamin, Maleinsäureanhydridcopolymere, Oligoacrylate, Isocyanat-terminierte Oligourethane, Oligoacrylsäure, Oligoester, Oligoacrylsäureglycolester, Oligovinylsäure, Oligoacrylethanolamid, Pentaerythrith, Polyamidamin, Polyethylenimin, Polyacrylsäure, Polyacrylate, Polyacrylethanolamid, Polyacrylsäureglycolester, Polyvinylalkohol, Epoxy-modifizierte Bisphenol- und/oder Novolakverbindungen eingesetzt werden.

5. Verfahren nach Anspruch 1, bei dem als Lösungs- oder Dispersionsmittel Wasser, wässrige Säuren oder Basen, anorganische und/oder organische Lösungsmittel eingesetzt werden.

6. Verfahren nach Anspruch 5, bei dem als organische Lösungsmittel Alkohole, Ketone, Ester und/oder Kohlenwasserstoffe eingesetzt werden.

7. Verfahren nach Anspruch 1, bei dem der Hilfsstoff in gelöster Form, als Partikel, Konglomerat und/oder als strukturierter Körper eingesetzt wird.

8. Verfahren nach Anspruch 1, bei dem Hilfsstoffe eingesetzt werden, die eine höhere Schmelztemperatur als die Temperatur der Kunststoffschmelze aufweisen.

9. Verfahren nach Anspruch 1, bei dem als Hilfsstoff lösliche Polymere, lösliche anorganische und/oder lösliche organische Stoffe eingesetzt werden.

10. Verfahren nach Anspruch 9, bei dem als lösliches Polymer Polyvinylamin, Polyallylamin, Polyacrylsäure, Salze der Polyacrylsäure und/oder Polyvinylalkohol eingesetzt wird.

11. Verfahren nach Anspruch 9, bei dem als lösliche anorganische und/oder lösliche organische Stoffe ein Salz, ein Metalloxid, ein Eisenoxid, Mischoxide mit 2 oder mehreren Metallen und /oder eine organische Verbindung eingesetzt werden.

12. Verfahren nach Anspruch 11, bei dem CaCO₃, NaCl, ZnO, Terephthalsäure und/oder Cyanursäure eingesetzt wird.

13. Verfahren nach Anspruch 1, bei dem der Kunststoff als Schmelze mittels Spritzgießen, Schmelzeschichtung und/oder Heißpressen in das Formwerkzeug eingebracht wird.

14. Verfahren nach Anspruch 1, bei dem die Hilfsstoffe vollständig aus den in der Oberfläche des Kunststoffes erzeugten Kavitäten entfernt werden.

15. Verfahren nach Anspruch 1, bei dem die Hilfsstoffe mittels Lösungsmittel, Ätzverfahren, Druckluftverfahren und/oder Sublimation entfernt werden.

16. Verfahren nach Anspruch 1, bei dem 30% bis 80%, insbesondere 40% bis 70 % der Kunststoffoberfläche durch Hilfsstoffe modifiziert werden.

17. Modifizierte Kunststoffoberflächen, hergestellt nach einem Verfahren nach Anspruch 1, bei denen der Kunststoff im Oberflächenbereich Strukturierungen in Form von zur Oberfläche hin offenen Kavitäten mit und ohne Hinterschneidungen aufweist und die innere und äußere Oberfläche des Kunststoffes mit Kavitäten und Hinterschneidungen im Wesentlichen vollständig mit einer oder mehreren Modifikatorsubstanzen beschichtet ist, deren reaktive Gruppen mit der Kunststoffoberfläche kovalente Bindungen eingegangen sind.

18. Modifizierte Kunststoffoberflächen nach Anspruch 17, bei der 30% bis 80%, insbesondere 40% bis 70 % der Kunststoffoberfläche durch Hilfsstoffe modifiziert sind.

19. Modifizierte Kunststoffoberflächen nach Anspruch 17, bei denen eine zusätzliche Schicht auf der modifizierten Kunststoffoberfläche angeordnet ist, die mindestens teilweise in die Kavitäten eingedrungen ist.

## Claims

1. Method for modifying surfaces of plastics, wherein at least one solution or dispersion which comprises at least one modifier substance, at least one solvent or dispersion medium and at least one or more auxiliaries is applied to the surface of a moulding tool, where compounds having reactive groups are used as modifier substance, the at least one solvent or dispersion medium is then removed from the moulding tool leaving behind the at least one modifier substance and the one or more auxiliaries, where the one or more auxiliaries are present as particle, crystallite or structured body after removal of the solvent or dispersion medium, at least one plastic is then introduced as melt into the moulding tool at least in the region of the modifier substance and the auxiliary or auxiliaries and the moulded plastic is then taken from the moulding tool, where the reactive groups of the modifier substances form covalent bonds with the surface of the plastic during shaping or afterwards, and the auxiliary or auxiliaries is/are subsequently at least partially removed from the surface of the shaped plastic to produce at least one cavity.

2. Method according to Claim 1, wherein acrylonitrile-butadiene-styrene (ABS), polyamide (PA), polylactide (PLA), polymethyl methacrylate (PMMA), polycarbonate (PC), polyethylene terephthalate (PET), polyethylene (PE), polypropylene (PP), polystyrene (PS), polyether ether ketone (PEEK), polyvinyl chloride (PVC) and/or blends thereof are used as plastic.

3. Method according to Claim 1, wherein the solution or dispersion is applied to the surface of the moulding tool by spray coating, dip coating, printing, painting and/or rolling.

4. Method according to Claim 1, wherein diethanolamine, diethylenetriamine, dipropylenetriamine, ethanolamine, glycerol, hexamethylenediamine, maleic anhydride copolymers, oligoacrylates, isocyanate-terminated oligourethanes, oligoacrylic acid, oligoesters, oligoacrylic acid glycol esters, oligovinyl acid, oligoacrylethanolamide, pentaerythritol, polyamidamine, polyethylenimine, polyacrylic acid, polyacrylates, polyacrylethanolamide, polyacrylic acid glycol esters, polyvinyl alcohol, epoxy-modified bisphenol and/or novolac compounds are used as modifier substance.

5. Method according to Claim 1, wherein water, aqueous acids or bases, inorganic and/or organic solvents are used as solvent or dispersion medium.

6. Method according to Claim 5, wherein alcohols, ketones, esters and/or hydrocarbons are used as organic solvents.

7. Method according to Claim 1, wherein the auxiliary is used in dissolved form, as particle, conglomerate and/or as structured body.

8. Method according to Claim 1, wherein auxiliaries which have a melting point higher than the temperature of the molten plastic are used.

9. Method according to Claim 1, wherein soluble polymers, soluble inorganic and/or soluble organic materials are used as auxiliary.

10. Method according to Claim 9, wherein polyvinylamine, polyallylamine, polyacrylic acid, salts of polyacrylic acid and/or polyvinyl alcohol is used as soluble polymer.

11. Method according to Claim 9, wherein a salt, a metal oxide, an iron oxide, mixed oxides having two or more metals and/or an organic compound are used as soluble inorganic and/or soluble organic materials.

12. Method according to Claim 11, wherein CaCO₃, NaCl, ZnO, terephthalic acid and/or cyanuric acid is used.

13. Method according to Claim 1, wherein the plastic is introduced as melt into the moulding tool by means of injection moulding, melt coating and/or hot pressing.

14. Method according to Claim 1, wherein the auxiliaries are removed completely from the cavities produced in the surface of the plastic.

15. Method according to Claim 1, wherein the auxiliaries are removed by means of solvents, etching processes, compressed air methods and/or sublimation.

16. Method according to Claim 1, wherein from 30% to 80%, in particular from 40% to 70%, of the surface of the plastic is modified by auxiliaries.

17. Modified surfaces of plastics, produced by a method according to Claim 1, wherein the plastic has structuring in the form of cavities which are open to the surface and are with or without undercuts in the surface region and the interior and exterior surface of the plastic having cavities and undercuts is coated essentially completely with one or more modifier substances whose reactive groups have formed covalent bonds to the surface of the plastic.

18. Modified surfaces of plastics according to Claim 17, wherein from 30% to 80%, in particular from 40% to 70%, of the surface of the plastic has been modified by auxiliaries.

19. Modified surfaces of plastics according to Claim 17, wherein an additional layer which has penetrated at least partially into the cavities has been arranged on the modified surface of the plastic.

## Revendications

1. Procédé pour la modification de surfaces de matière plastique, dans lequel au moins une solution ou dispersion, qui comprend au moins une substance de modification, au moins un solvant ou agent de dispersion et au moins une ou plusieurs matières auxiliaires, est appliquée au moins partiellement sur la surface d'un outil de moulage, des composés dotés de groupes réactifs étant utilisés en tant que substance de modification, puis l'au moins un solvant ou agent de dispersion étant éliminé de l'outil de moulage, laissant en retrait l'au moins une substance de modification et la ou les matières auxiliaires, la ou les matières auxiliaires étant présentes en tant que particule, cristallite ou corps structuré après l'élimination du solvant ou de l'agent de dispersion, ensuite au moins une matière plastique étant introduite en tant que masse fondue dans l'outil de moulage au moins dans la zone de la substance de modification et de la ou des matières auxiliaires, et ensuite la matière plastique moulée étant démoulée de l'outil de moulage, les substances de modification formant des liaisons covalentes avec les groupes réactifs pendant le moulage ou à la suite du moulage, et par la suite la ou les matières auxiliaires étant retirées de la surface de la matière plastique moulée pour produire au moins une cavité.

2. Procédé selon la revendication 1, un acrylonitrile-butadiène-styrène (ABS), un polyamide (PA), un polylactide (PLA), un poly(méthacrylate de méthyle) (PMMA), un polycarbonate (PC), un poly(téréphtalate d'éthylène) (PET), un polyéthylène (PE), un polypropylène (PP), un polystyrène (PS), une polyétheréthercétone (PEEK), un poly(chlorure de vinyle) (PVC) et/ou des mélanges de ceux-ci étant utilisés en tant que matière plastique.

3. Procédé selon la revendication 1, la solution ou dispersion étant appliquée par revêtement par pulvérisation, par revêtement par trempage, par impression, par enduction et/ou par laminage sur la surface de l'outil de moulage.

4. Procédé selon la revendication 1, dans lequel de la diéthanolamine, de la diéthylènetriamine, de la dipropylènetriamine, de l'éthanolamine, de la glycérine, de l'hexaméthylènediamine, des copolymères d'anhydride maléique, des oligoacrylates, des oligouréthanes terminés par isocyanate, des oligo(acide acrylique), des oligoesters, des oligo(ester de glycol d'acide acrylique), des oligo(acide vinylique), un oligoacryléthanolamide, le pentaérythritol, une polyamidoamine, une polyéthylèneimine, un poly(acide acrylique), un polyacrylate, un polyacryléthanolamide, un poly(ester de glycol d'acide acrylique), un poly(alcool vinylique), des composés de bisphénol et/ou de novolak modifiés par époxy sont utilisés en tant que substance de modification.

5. Procédé selon la revendication 1, dans lequel de l'eau, des acides aqueux ou des bases aqueuses, des solvants inorganiques et/ou organiques sont utilisé(e)s en tant que solvant ou agent de dispersion.

6. Procédé selon la revendication 5, dans lequel des alcools, des cétones, des esters et/ou des hydrocarbures sont utilisés en tant que solvants organiques.

7. Procédé selon la revendication 1, dans lequel la matière auxiliaire est utilisée sous forme dissoute, en tant que particule, en tant que conglomérat et/ou en tant que corps structuré.

8. Procédé selon la revendication 1, dans lequel des matières auxiliaires sont utilisées qui présentent une température de fusion supérieure à la température de la masse fondue de matière plastique.

9. Procédé selon la revendication 1, dans lequel des polymères solubles, des matières inorganiques solubles et/ou organiques solubles sont utilisé(e)s en tant que matière auxiliaire.

10. Procédé selon la revendication 9, dans lequel une polyvinylamine, une polyallylamine, un poly(acide acrylique), des sels de poly(acide acrylique) et/ou un poly(alcool vinylique) est/sont utilisé(s) en tant que polymère soluble.

11. Procédé selon la revendication 9, dans lequel un sel, un oxyde métallique, un oxyde de fer, des oxydes mixtes avec 2 métaux ou plus et/ou un composé organique sont utilisés en tant que matières inorganiques solubles et/ou organiques solubles.

12. Procédé selon la revendication 11, dans lequel du CaCO₃, du NaCl, du ZnO, de l'acide téréphtalique et/ou de l'acide cyanurique est utilisé.

13. Procédé selon la revendication 1, dans lequel la matière plastique en tant que masse fondue est introduite dans l'outil de moulage au moyen d'un moulage par injection, d'un revêtement fusible et/ou d'un pressage à chaud.

14. Procédé selon la revendication 1, dans lequel les matières auxiliaires sont éliminées complètement des cavités générées dans la surface de la matière plastique.

15. Procédé selon la revendication 1, dans lequel les matières auxiliaires sont éliminées au moyen d'un solvant, d'un procédé de gravure, d'un procédé à air comprimé et/ou par sublimation.

16. Procédé selon la revendication 1, dans lequel 30 % à 80 %, en particulier 40 % à 70 % de la surface de matière plastique sont modifiés par des matières auxiliaires.

17. Surfaces de matière plastique modifiées, préparées par un procédé selon la revendication 1, dans lesquelles la matière plastique présente des structurations dans la zone de surface sous forme de cavités ouvertes en direction de la surface avec et sans contre-dépouilles et la surface interne et externe de la matière plastique avec des cavités et des contre-dépouilles est revêtue essentiellement complètement avec une ou plusieurs substances de modification, dont les groupes réactifs ont formé des liaisons covalentes avec la surface de matière plastique.

18. Surfaces de matière plastique modifiées selon la revendication 17, dans lesquelles 30 % à 80 %, en particulier 40 % à 70 % de la surface de matière plastique sont modifiés par des matières auxiliaires.

19. Surfaces de matière plastique modifiées selon la revendication 17, dans lesquelles une couche supplémentaire est disposée sur la surface de matière plastique modifiée, qui a pénétré au moins partiellement dans les cavités.
